# EUROPEAN PATENT SPECIFICATION

(11) **EP 4 108 572 B1**
(45) Date of publication and mention of the grant of the patent: **28.02.2024**
(21) Application number: 22178093.5
(22) Date of filing: 09.06.2022
(51) Int. Cl.: B64D 15/12, H05B 3/14, H05B 3/28, H05B 3/36, B23K 26/352, B23K 26/354, B23K 103/00

(54) **AIRCRAFT FEATURE WITH HEATING SYSTEM FORMED OF LASER-INDUCED GRAPHENE**
FLUGZEUGMERKMAL MIT HEIZSYSTEM AUS LASERINDUZIERTEM GRAPHEN
CARACTÉRISTIQUE D'AÉRONEF AVEC SYSTÈME DE CHAUFFAGE FORMÉ DE GRAPHÈNE INDUIT PAR LASER

(30) Priority: 24.06.2021 US 202117357676
(43) Date of publication of application: 28.12.2022
(73) Proprietor: Goodrich Corporation, Charlotte, NC 28217-4578 (US)
(72) Inventor: CHING, Nathaniel, Hartville, OH, 44632 (US); HU, Jin, Hudson, 44236 (US); SLANE, Casey, Tallmadge, OH, 44278 (US); BOTURA, Galdemir Cezar, Copley, 44321 (US); WENPING, Zhao, Glastonbury, CT, 06033 (US)
(74) Representative: Dehns

(56) References cited:
- EP-A1- 3 738 883
- WO-A2-2021/030300
- US-A1- 2015 053 663

## Description

### BACKGROUND

The embodiments herein relate to heating systems and more specifically to an aircraft feature with a heating system formed of laser-induced graphene.

Control surfaces of an aircraft may utilize heating to avoid icing. In addition, an aircraft may have internal components that engage fluids, such as tubes, valves and tanks, e.g., utilized for potable or wastewater systems. Such internal components may also utilize heating for aircraft systems to operate properly. Other internal features, such as walkways and seating, may also utilize heating to provide comfort to crew and passengers.

Examples of methods of providing a heating system to an outer skin of an aircraft are disclosed in US 2015/053663 A1 and in EP 3 738 883 A1.

### BRIEF DESCRIPTION

Disclosed is a first method of providing a heating system to an outer skin of an aircraft, including: forming laser-induced graphene (LIG) on a polymer sheet by directing laser energy towards the polymer sheet; coupling electrical leads to the LIG; and bonding the polymer sheet against the outer skin or erosion protection layer secured to the outer skin so that to the polymer sheet conforms with a shape of the outer skin.

In addition to one or more aspects of the disclosed first method, or as an alternate, the first method includes coupling the electrical leads to a power source; and engaging the power source for one or more of: deicing the outer skin of the aircraft; and preventing ice from forming on the outer skin of the aircraft.

In addition to one or more aspects of the disclosed first method, or as an alternate, the outer skin is shaped as an airfoil, and the outer skin is formed of a carbon-glass fiber composite.

In addition to one or more aspects of the disclosed first method, or as an alternate, the first method includes bonding an insulating layer to the polymer sheet.

In addition to one or more aspects of the disclosed first method, or as an alternate the polymer sheet is thermoformed to the shape of the outer skin; and forming the LIG is performed after the polymer sheet is thermoformed to the shape of the outer skin.

In addition to one or more aspects of the disclosed first method, or as an alternate, the LIG is formed in a mesh pattern or a serpentine pattern.

In addition to one or more aspects of the disclosed first method, or as an alternate, the electrical leads are electrically coupled to the LIG via a busbar or a trace.

In addition to one or more aspects of the disclosed first method, or as an alternate, the busbars or traces form an interdigitated pattern.

In addition to one or more aspects of the disclosed first method, or as an alternate the insulating layer is a one or more of a fiberglass composite, a polyimide or silicone insulation; and the polymer sheet is: a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA); or a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN).

Further disclosed is a second method of providing a heating system to an interior structure of an aircraft, including forming laser-induced graphene (LIG) on a polymer sheet by directing laser energy towards the polymer sheet; coupling electrical leads to the LIG; bonding the polymer sheet against the interior structure; bonding a carbon fiber composite structure to the polymer sheet; and bonding an insulating layer to the carbon fiber composite structure.

In addition to one or more aspects of the disclosed second method, or as an alternate, the interior structure is: a floor panel formed of titanium or stainless steel; or a seat.

In addition to one or more aspects of the disclosed second method, or as an alternate, the carbon fiber composite structure is formed of: a first carbon fiber composite ply; a support core bonded to the first carbon fiber composite ply; and a second carbon fiber composite ply bonded to the support core.

In addition to one or more aspects of the disclosed second method, or as an alternate, the support core is an aromatic polyamide sheet or an aluminum honeycomb sheet.

In addition to one or more aspects of the disclosed second method, or as an alternate, forming the LIG is performed after bonding the polymer sheet against the interior structure.

In addition to one or more aspects of the disclosed second method, or as an alternate, the LIG is formed as a mesh pattern or a serpentine pattern.

In addition to one or more aspects of the disclosed second method, or as an alternate, the electrical leads are electrically coupled to the LIG via a busbar or a trace.

In addition to one or more aspects of the disclosed second method, or as an alternate, the busbars or traces form an interdigitated pattern.

In addition to one or more aspects of the disclosed second method, or as an alternate the insulating layer is foam; and the polymer sheet is: a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA); or a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN).

Further disclosed is a third method of providing a heating system to a component of an aircraft system, including forming laser-induced graphene (LIG) onto an outer skin of the component by directing laser energy towards the skin of the component, wherein the outer skin is formed of a polymer; and coupling electrical leads to the LIG, wherein the component is a valve or tank.

In addition to one or more aspects of the disclosed third method, or as an alternate, the LIG is formed as a mesh pattern or a serpentine pattern.

In addition to one or more aspects of the disclosed third method, or as an alternate, the third method includes bonding an insulating layer to the outer skin, wherein the insulating layer is a one or more of a polyimide or silicone insulation.

In addition to one or more aspects of the disclosed third method, or as an alternate, covering the insulating layer in a fabric covering. In addition to one or more aspects of the disclosed third method, or as an alternate, the electrical leads are electrically coupled to the LIG via a busbar or a trace.

In addition to one or more aspects of the disclosed third method, or as an alternate, the busbars or traces form an interdigitated pattern.

### BRIEF DESCRIPTION OF THE DRAWINGS

FIG. 1 is a perspective view of an aircraft that includes aerodynamic surfaces where embodiments of the present invention can be implemented;
FIG. 2 is a flowchart of a method of providing a heating system formed of laser-induced graphene to an outer skin of an aircraft;
FIG. 3A is a schematic illustration of an outer skin of an aircraft provided with a heating system formed of laser-induced graphene;
FIG. 3B shoes traces in an interdigitated pattern connecting a polymer sheet with a laser-induced graphene pattern to a power source via electrodes;
FIG. 4 is a flowchart of a method of providing a heating system formed of laser-induced graphene to an interior structure of an aircraft;
FIG. 5 is a schematic illustration of an interior structure of an aircraft provided with a heating system formed of laser-induced graphene;
FIG. 6 is a flowchart of a method of providing a heating system formed of laser-induced graphene to a component of an aircraft; and
FIG. 7 is a schematic illustration of a component of an aircraft provided with a heating system formed of laser-induced graphene.

### DETAILED DESCRIPTION

A detailed description of one or more embodiments of the disclosed apparatus and method are presented herein by way of exemplification and not limitation with reference to the Figures.

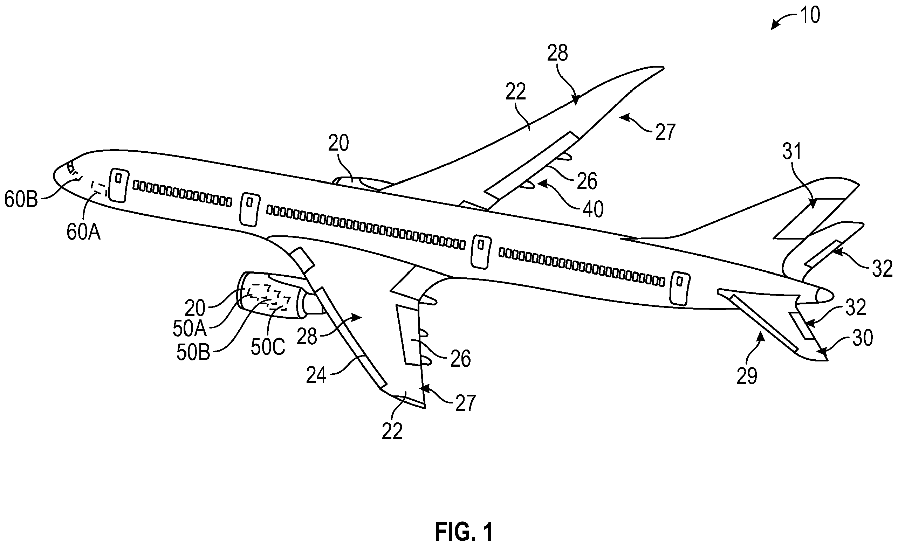

FIG. 1 illustrates an example of a commercial aircraft 10 having aircraft engines surrounded by (or otherwise carried in) a nacelles 20. The aircraft 10 includes two wings 22 that can each include one or more slats 24 and one or more flaps 26. The aircraft may further include ailerons 27, spoilers 28, horizontal stabilizer trim tabs 29, horizontal stabilizer 30 and rudder 31, and vertical stabilizer 32 (the tail structure being collectively referred to as an empennage) each of which may be typically referred to as "control surfaces" 40 as they are movable under aircraft power systems.

As indicated, the control surfaces 40 may utilize heating to avoid icing. In addition, the aircraft 10 may have internal components, generally referred to as 50, such as tubes 50A, valves 50B and tanks 50C that engage fluids and may also utilize heating for the aircraft systems to operate properly. Other internal features, generally referred to as 60, such as walkways 60A and seating 60B, may also utilize heating to provide comfort to crew and passengers.

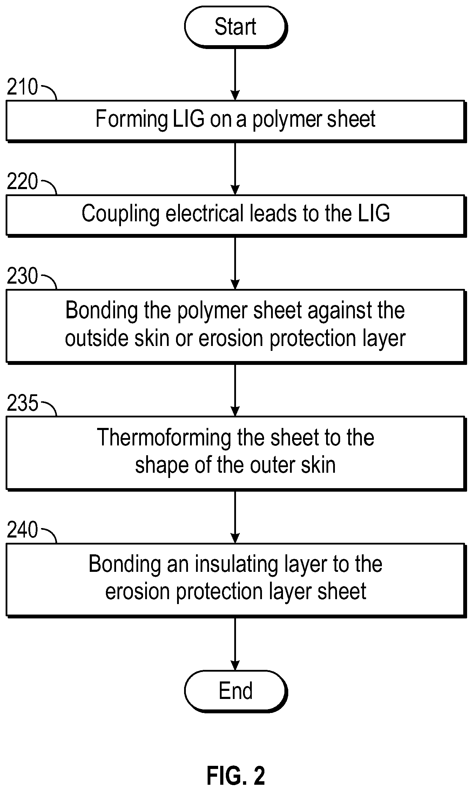

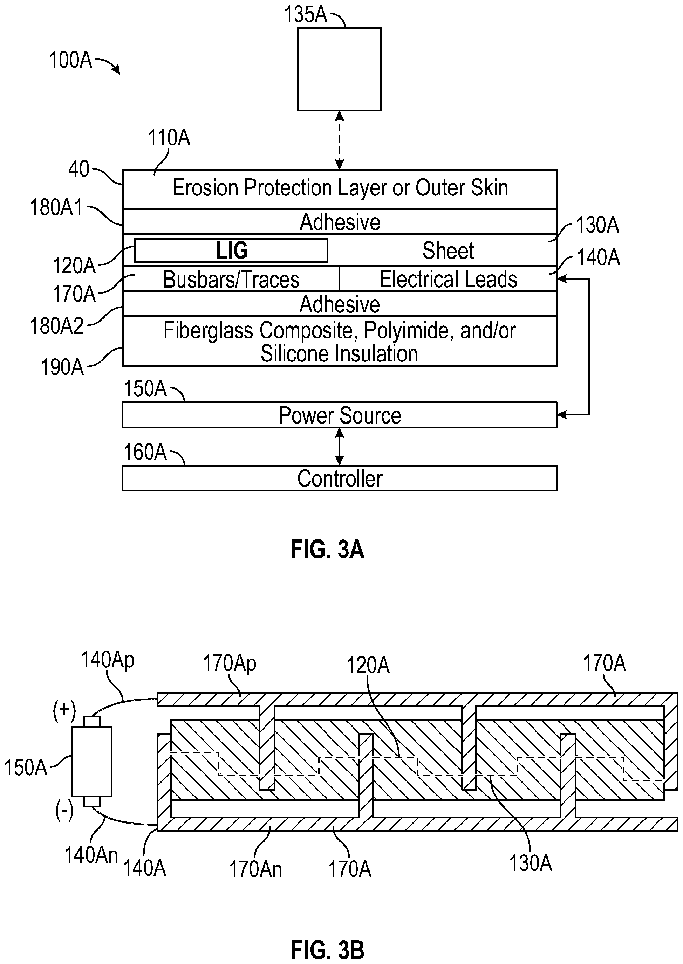

FIG. 2 is s flowchart showing a (first) method of providing a heating system 100A formed of laser-induced graphene (LIG) to an outer skin 110A of, e.g., a control surface 40 of an aircraft 10 (FIG. 1). FIG. 3A schematically shows a product formed by the method shown in the flowchart of FIG. 2. According to an embodiment, the outer skin 110A is shaped as an airfoil. In one embodiment the outer skin 110A is formed of a carbon-glass fiber composite. Though control surfaces 40 are identified for the application of the heating system 110A, other outer skin surfaces of an aircraft 10 may be provided with the heating system 100A in accordance with the disclosed embodiments, including but not limited to blades, including curved propellors, a nacelle bullnose, a propeller spinner (nose cone). It is to be appreciated that such heating systems 100A may be applicable to wind turbine and marine applications.

With continued reference to FIGS. 2 through 3B, and as shown in block 210, the method includes forming laser-induced graphene (LIG) 120A on a polymer sheet 130A, e.g., with a laser 135A. The formation of LIG 120A utilizes the laser 135A to cause a direct conversion of polymers in the polymer sheet 130A to be converted into porous graphene under ambient conditions. As non-limiting examples, the LIG 120A is formed as a mesh pattern or a serpentine pattern, e.g., for distributing heat. The laser 135A can be a carbon dioxide laser scriber.

The polymer sheet 130A may be a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA). Alternatively, the polymer sheet 130A may be a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN). In addition, the polymer sheet 130A may be formed of a non-woven, woven or unidirectional polymer.

As shown in block 220, the method includes coupling electrical leads 140A to the LIG 120A. The electrical leads 140A may be connected to a power source 150A operated by a controller 160A located in the aircraft 10. The electrical leads 140A are electrically coupled to the LIG 120A via connectors 170A that can take the form of busbars or traces. The busbars or traces may form an interdigitated pattern, e.g., if the LIG 120A is too resistive. Examples of such patterns are disclosed in US20180213606, titled Carbon allotrope heaters with multiple interdigitated electrodes, and filed on behalf of Goodrich Corp. FIG. 3B shows an interdigitated pattern that includes connectors (busbars or traces) 170A in the form of a positive connector 170Ap and negative connector 170An connected to the polymer sheet 130A, and more specifically to the LIG 120A. Electric leads 140A in the form of a positive lead 140Ap and a negative lead 140An connect the connector 170A to a power source 150A. The patterns shown in FIG. 3B are non-limiting examples.

The connectors 170A may be secured to, or formed onto, the polymer sheet 130A using known methods. The combination of the polymer sheet 130A, the LIG 120A, and any connectors 170A that enable connecting with electrical leads 140A, collectively may be considered a heater, and the LIG 120A may be considered a heating element.

As shown in block 230, the method includes bonding the polymer sheet 130A against the outer skin 110A or erosion protection layer if such is against the outer skin 110A, so that to the polymer sheet 130A conforms with a shape of the outer skin 110A. The bonding may be accomplished with a first layer of adhesive 180A1, which may be a known suitable adhesive. In some embodiments, depending on the fitting requirements, this process may include block 235 of thermoforming the sheet 130A to the shape of the outer skin 110A. As can be appreciated, bonding and thermoforming may occur simultaneously.

As shown in block 240, the method may further include bonding an insulating layer 190A to the polymer sheet 130A, e.g., to cover the LIG 120A. The bonding may be accomplished with a second layer of adhesive 180A2, which may be a known suitable adhesive and which may be the same as or different than the other layers of adhesive disclosed herein. The insulating layer 190 would ensure that heat radiating from the LIG 120A is directed toward the outer skin 110A. The insulating layer 190A may be one or more of a fiberglass composite, a polyimide or silicone insulation. Not all applications require the insulating layer. For example, ice protection for propellers may be installed on the outside of the propeller, and in such implementation, no insulation may be utilized.

In one embodiment, forming the LIG 120A is performed after the polymer sheet 130A is bonded and/or thermoformed against the outer skin 110A of the aircraft 10. Such an in-situ process may reduce the likelihood of compromising the LIG 120A when manipulating the polymer sheet 130A to the shape of the outer skin 110A. In addition, such an in-situ process may enable a design the pattern of the LIG 120A around a complex geometry that may be difficult to model in advance of bonding and/or thermoforming.

With the above embodiment, the amount of induced graphene may correlate to a resistance of the composite surface layer of the outer skin 110A. That is, the LIG 120A may be formed to directly create (or tune) a resistance of the composite surface of the skin 110A before bonding of the erosion protection layer 185A. Resin chemistry of the skin 110A, fiber volume per polymer sheet 130A, i.e., a fiber fraction of, e.g., 20 to 65 percent, and the process of forming the LIG 120A, may be optimized to meet such resistance requirements.

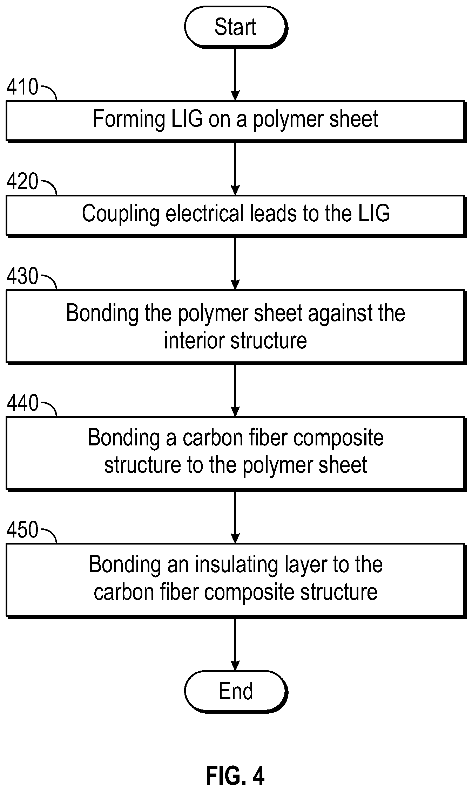

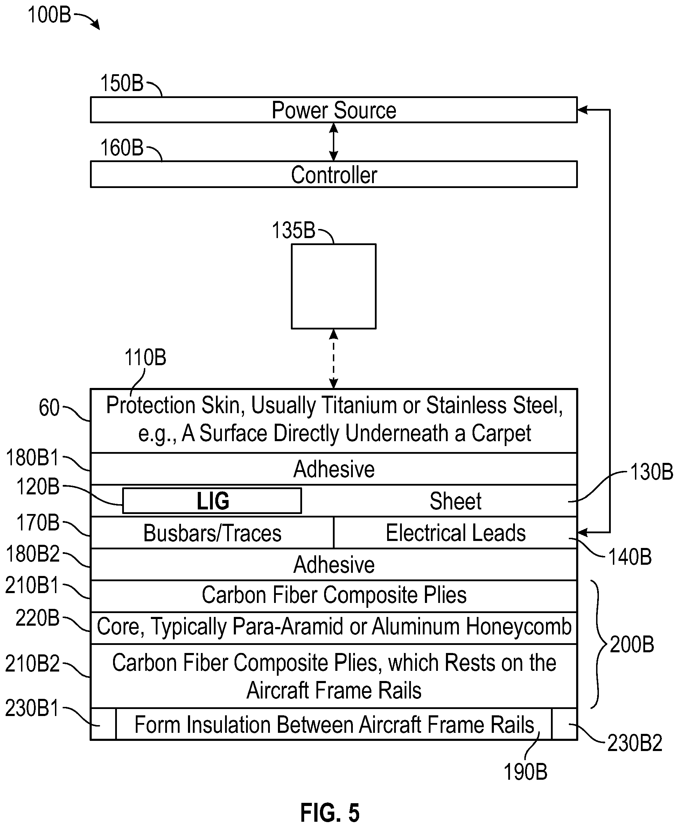

FIG. 4 is s flowchart showing a (second) method of providing a heating system 100B formed of laser-induced graphene (LIG) 120B to an interior structure 60 of an aircraft 10 (FIG. 1). FIG. 5 schematically shows a product formed by the method shown in the flowchart of FIG. 4. In one embodiment, the interior structure 60 is a floor panel formed of titanium or stainless steel (FIG. 1). In one embodiment, the interior structure 60 is a seat, e.g., of the crew or a passenger (FIG. 1).

With continued reference to FIGS. 4 and 5, and as shown in block 410, the method includes forming LIG 120B on a polymer sheet 130B, e.g., with a laser 135B. The formation of LIG 120B utilizes the laser 135B to cause a direct conversion of polymers in the polymer sheet 130B to be converted into porous graphene under ambient conditions. As non-limiting examples, the LIG 120B is formed as a mesh pattern or a serpentine pattern, e.g., for distributing heat. The laser 135B can be a carbon dioxide laser scriber.

The polymer sheet 130B may be a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA). Alternatively, the polymer sheet 130B may be a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN). In addition, the polymer sheet 130A may be formed of a non-woven, woven or unidirectional polymer.

As shown in block 420, the method includes coupling electrical leads 140B to the LIG 120B. The electrical leads 140B may be connected to a power source 150B operated by a controller 160B located in the aircraft 10. The electrical leads are electrically coupled to the LIG 120B via connectors 170B that can take the form of busbars or traces. The busbars or traces may form an interdigitated pattern. The connectors 170B may be secured to, or formed onto, the polymer sheet 130B using known methods. The combination of the polymer sheet 130B, the LIG 120B, and any connectors 170B that enable connecting with electrical leads 140B, collectively may be considered a heater, and the LIG 120B may be considered a heating element.

As shown in block 430, the method includes bonding the polymer sheet 130B against a skin 110B of the interior structure 60. The bonding may be accomplished with a first layer of adhesive 180B1, which may be a known suitable adhesive.

As shown in block 440, the method includes bonding a carbon fiber composite structure 200B to the polymer sheet 130B to encase the LIG 120B between the skin 110B of the interior structure 60 and the carbon fiber composite structure 200B. The bonding may be accomplished with a second layer of adhesive 180B2, which may be a known suitable adhesive and which may be the same as or different than the other layers of adhesive disclosed herein.

In one embodiment, the carbon fiber composite structure 200B is formed as a sandwich structure of a first carbon fiber composite ply 210B1, a support core 220B bonded to the first carbon fiber composite ply 210B 1, and a second carbon fiber composite ply 210B2 bonded to the support core 220B. The second carbon fiber composite ply 220B2 may be secured to frame rails 230B1, 230B2 of the aircraft 10. In one embodiment, the support core 220B is an aromatic polyamide sheet or an aluminum honeycomb sheet.

As shown in block 450, the method includes bonding an insulating layer 190B to the carbon fiber composite structure 200B. In one embodiment, the insulating layer 190B is foam. The insulating layer 190B is disposed between the frame rails 230B1, 230B2.

In one embodiment, forming the LIG 120B is performed after the polymer sheet 130B is bonded against the skin 110B of the interior structure 60. Such an in-situ process may reduce the likelihood of compromising the LIG 120B when manipulating the polymer sheet 130B during the installation process.

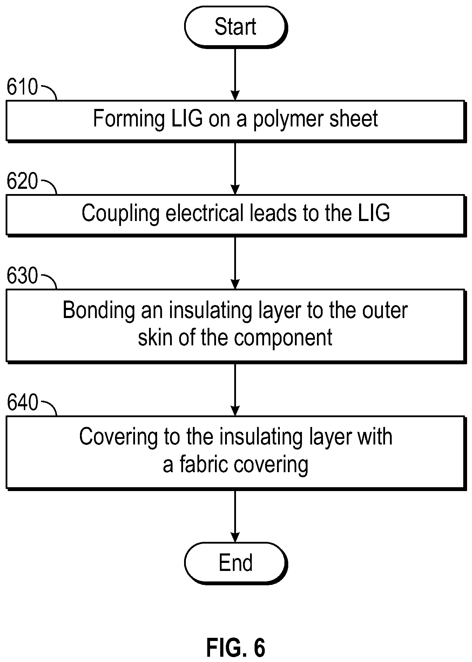

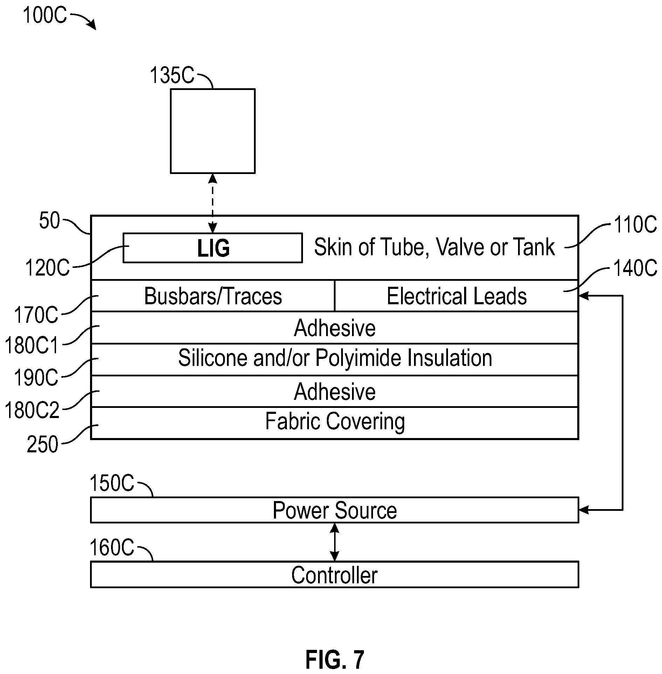

FIG. 6 is s flowchart showing a (third) method of providing a heating system 100C formed of laser-induced graphene (LIG) to a component 50 of an aircraft 10 (FIG. 1). FIG. 7 schematically shows a product formed by the method shown in the flowchart of FIG. 6. In embodiments, the component 50 may be a tube, valve or tank, e.g., utilized for potable or wastewater systems, as non-limiting examples. Applications of the heating system 100C according to embodiments include water tubing and hoses or any other type of piping or duct that water and water vapor (e.g., due to humidity) can freeze and impact safety for an aircraft system or aircraft systems. Applications further include water tanks or other type of tanks or containers that may require a heater for maintaining a surface or internal media temperature above a predetermined temperature.

With continued reference to FIGS. 6 and 7, and as shown in block 610, the method includes forming laser-induced graphene (LIG) 120C onto a skin 110C, e.g., an outer skin, of the component 50, e.g., with a laser 135C. In one embodiment, the skin 110C is formed of a polymer. The formation of LIG 120C utilizes the laser scriber 135C to cause a direct conversion of polymers in the skin 110C to be converted into porous graphene under ambient conditions. The laser 135C can be a carbon dioxide laser scriber.

As non-limiting examples, the LIG 120C is formed as a mesh pattern or a serpentine pattern, for the distribution of heat. Such an in-situ process may enable a designing a pattern of the LIG 120C around a complex geometry that may be difficult to model in advance or otherwise pattern.

As shown in block 620, the method includes coupling electrical leads 140C to the LIG 120C. The electrical leads 140C may be connected to a power source 150C operated by a controller 160C located in the aircraft 10. The electrical leads are electrically coupled to the LIG 120C via connectors 170C that can take the form of busbars or traces. The busbars or traces may form an interdigitated pattern. The connectors 170C may be secured to, or formed onto, the skin 110C of the component 50 using known methods. The combination of the skin 110C, the LIG 120C, and any connectors 170C that enable connecting with electrical leads 140C, collectively may be considered a heater, and the LIG 120C may be considered a heating element.

As shown in block 630, the method may include bonding an insulating layer 190C to the skin 110C of the component 50. The bonding may be accomplished with a layer of adhesive 180C1, which may be a known suitable adhesive that may be the same as or differ from other adhesives disclosed herein. In one embodiment, the insulating layer 190C is a one or more of a polyimide or silicone insulation.

As shown in block 640, the method may include covering the insulating layer 190C with a fabric covering 250C, such as an overbraiding in the case of a tube. That is, optional protection layers or mounting features may be added to the assembly outside the insulation layer. The fabric covering 250C may be secured via a bonding with a second layer of adhesive 180C2, which may be a known suitable adhesive that may be the same as or differ from other adhesives disclosed herein. This will help protect the insulating layer 190C from wear.

As indicated with the above embodiments, a laser can be used to carbonize a layer of an (organic) polymer sheet in a pattern. The carbonized material forms an electrically conductive graphite layer, i.e., laser-induced graphene. Electricity is passed through the graphite layer to heat the organic sheet. The carbonized layer can have a mesh pattern, a serpentine pattern, or any other pattern. The patterns may be scribed directly onto a curved surface such as a tube, valve or tank. The patterns may be lasered on a flat polymer sheet before or after the sheet is wrapped around a curved surface, such as an airfoil. If the carbon is sufficiently adhered to the sheet after carbonization, the sheet may be thermoformed to its final shape after the laser-induced graphene (e.g., the heating element) is carbonized into the surface.

With the disclosed embodiments, detailed heater patterns may be made relatively rapidly and inexpensively fabricated without utilizing relatively hazardous chemicals typically utilized for other processes, such as fabricating heaters with metal foils. Heaters identified herein can be used for ice protection on the exterior of the aircraft or for freeze protection on potable or wastewater systems inside the aircraft. It is to be appreciated that heating element patterns and bus bar and trace configuration and connection areas may also be controlled by the automated laser beam motion.

Thus, the above disclosed in-situ process may provide various benefits, including eliminating separate heater fabrication process steps, and providing tailoring of resistance for local deicing/anti-icing demands. Additional benefits include reducing heater materials and providing a light-weighting and low energy consumption system. Other benefits include providing relatively simple field heater repair due to in-situ processing and providing for reduced process variation and cost. Moreover, the embodiments may provide for minimizing chemical use, resulting in an environmentally friendly solution.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method of providing a heating system (100A) to an outer skin of an aircraft. comprising:
forming laser-induced graphene (120A), LIG, on a polymer sheet (130A) by directing laser energy towards the polymer sheet;
coupling electrical leads (140A) to the LIG; and
bonding the polymer sheet against the outer skin (110A) or erosion protection layer secured to the outer skin so that to the polymer sheet conforms with a shape of the outer skin.

2. The method of claim 1, including:
coupling the electrical leads (140A) to a power source (150A); and
engaging the power source for one or more of: deicing the outer skin (110A) of the aircraft; and preventing ice from forming on the outer skin of the aircraft; and/or wherein:
the outer skin is shaped as an airfoil, and
the outer skin is formed of a carbon-glass fiber composite.

3. The method of claim 1 or 2, further comprising:
bonding an insulating layer (190A) to the polymer sheet (130A).

4. The method of any preceding claim, wherein:
the polymer sheet (130A) is thermoformed to the shape of the outer skin(110A); and
forming the LIG (120A) is performed after the polymer sheet is thermoformed to the shape of the outer skin, and/or wherein:
the LIG is formed in a mesh pattern or a serpentine pattern.

5. The method of any preceding claim, wherein:
the electrical leads (140A) are electrically coupled to the LIG (120A) via a busbar or a trace (170A);
and preferably wherein the busbars or traces form an interdigitated pattern.

6. The method of claim 3, wherein:
the insulating layer (190A) is a one or more of a fiberglass composite, a polyimide or silicone insulation; and
the polymer sheet (130A) is:
a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA); or
a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN).

7. A method of providing a heating system (100B) to an interior structure of an aircraft, comprising:
forming laser-induced graphene (120B), LIG, on a polymer sheet (130B) by directing laser energy towards the polymer sheet;
coupling electrical leads (140B) to the LIG;
bonding the polymer sheet against the interior structure;
bonding a carbon fiber composite structure (200B) to the polymer sheet; and
bonding an insulating layer (190B) to the carbon fiber composite structure.

8. The method of claim 7, wherein:
the interior structure is:
a floor panel formed of titanium or stainless steel; or
a seat, and preferably wherein:
the carbon fiber composite structure (200B) is formed of
a first carbon fiber composite ply(210B1);
a support core (220B) bonded to the first carbon fiber composite ply; and
a second carbon fiber composite ply (210B2) bonded to the support core, and
more preferably wherein:
the support core (220B) is an aromatic polyamide sheet or an aluminum honeycomb sheet.

9. The method of claim 7 or 8, wherein:
forming the LIG (120B) is performed after bonding the polymer sheet (130B) against the interior structure.

10. The method of any of claims 7-9, wherein:
the LIG (120B) is formed as a mesh pattern or a serpentine pattern

11. The method of any of claims 7-10, wherein:
the electrical leads (140B) are electrically coupled to the LIG (120B) via a busbar or a trace (170B), and preferably wherein the busbars or traces form an interdigitated pattern.

12. The method of any of claims 7-11, wherein:
the insulating layer (190B) is foam; and
the polymer sheet (130B) is:
a thermoset polymer sheet that is formed of phenolics, polyimide (PI), cured epoxy, uncured epoxy, cured cyanate ester, uncured cyanate ester, cured polyurethane, uncured polyurethane, cured silicone, uncured silicone or polyarylacetylene (PAA); or
a thermoplastic polymer sheet formed of one or more of polyimide (PI), polyetherketoneketone (PEKK), polyaryletherkeone (PAEK), polyester, polyetheretherketone (PEEK), polyamide, polysulfone, polyetherimide, thermoplastic polyurethane (TPU), or polyethylene naphthalate (PEN).

13. A method of providing a heating system (100C) to a component of an aircraft system, comprising:
forming laser-induced graphene (120C), LIG, onto an outer skin of the component by directing laser energy towards the skin of the component, wherein the outer skin is formed of a polymer; and
coupling electrical leads (140C) to the LIG,
wherein the component is a valve, tube, hose, or tank.

14. The method of claim 13, wherein:
the LIG (120C) is formed as a mesh pattern or a serpentine pattern, and/or further comprising:
bonding an insulating layer (190C) to the outer skin, wherein the insulating layer is a one or more of a polyimide or silicone insulation, and preferably further comprising:
covering the insulating layer (190C) in a fabric covering (250).

15. The method of claim 13 or 14, wherein:
the electrical leads (140C) are electrically coupled to the LIG via a busbar or a trace (170C), and preferably wherein:
the busbars or traces form an interdigitated pattern.

## Patentansprüche

1. Verfahren zum Bereitstellen eines Heizsystems (100A) für eine Außenhaut eines Flugzeugs, Folgendes umfassend:
Bilden von laserinduziertem Graphen (120A), LIG, auf einer Polymerfolie (130A) durch Richten von Laserenergie auf die Polymerfolie;
Koppeln von elektrischen Leitungen (140A) mit dem LIG; und
Binden der Polymerfolie gegen die Außenhaut (110A) oder Erosionsschutzschicht, die an der Außenhaut befestigt ist, sodass sich die Polymerfolie an die Form der Außenhaut anpasst.

2. Verfahren nach Anspruch 1, Folgendes beinhaltend:
Koppeln der elektrischen Leitungen (140A) mit einer Stromquelle (150A); und
Einschalten der Stromquelle für eines oder mehrere der Folgenden: Enteisen der Außenhaut (110A) des Flugzeugs; und
Verhindern der Eisbildung auf der Außenhaut des Flugzeugs; und/oder wobei:
die Außenhaut die Form einer Tragfläche hat, und
die Außenhaut aus einem Kohlenstoff-Glasfaser-Verbundstoff besteht.

3. Verfahren nach Anspruch 1 oder 2, ferner Folgendes umfassend:
Binden einer Isolierschicht (190A) an die Polymerfolie (130A).

4. Verfahren nach einem der vorhergehenden Ansprüche, wobei:
die Polymerfolie (130A) in die Form der Außenhaut (110A) warmgeformt wird; und
Bilden des LIG (120A) durchgeführt wird, nachdem die Polymerfolie in die Form der Außenhaut warmgeformt wurde, und/oder wobei:
das LIG in einem Maschen- oder Serpentinenmuster gebildet ist.

5. Verfahren nach einem der vorhergehenden Ansprüche, wobei: die elektrischen Leitungen (140A) über eine Sammelschiene oder eine Leiterbahn (170A) elektrisch mit dem LIG (120A) gekoppelt sind; und vorzugsweise, wobei die Sammelschienen oder Leiterbahnen ein ineinandergreifendes Muster bilden.

6. Verfahren nach Anspruch 3, wobei:
die Isolierschicht (190A) eine oder mehrere von einem Glasfaserverbundstoff, einer Polyimid- oder Silikonisolierung ist; und
die Polymerfolie (130A) Folgendes ist:
eine duroplastische Polymerfolie, die aus Phenolen, Polyimid (PI), gehärtetem Epoxidharz, ungehärtetem Epoxidharz, gehärtetem Cyanatester, ungehärtetem Cyanatester, gehärtetem Polyurethan, ungehärtetem Polyurethan, gehärtetem Silikon, ungehärtetem Silikon oder Polyarylacetylen (PAA) besteht; oder
eine thermoplastische Polymerfolie, die aus einem oder mehreren von Polyimid (PI), Polyetherketonketon (PEKK), Polyaryletherketon (PAEK), Polyester, Polyetheretherketon (PEEK), Polyamid, Polysulfon, Polyetherimid, thermoplastischem Polyurethan (TPU) oder Polyethylennaphthalat (PEN) besteht.

7. Verfahren zum Bereitstellen eines Heizsystems (100B) für eine Innenstruktur eines Flugzeugs, Folgendes umfassend:
Bilden von laserinduziertem Graphen (120B), LIG, auf einer Polymerfolie (130B) durch Richten von Laserenergie auf die Polymerfolie;
Koppeln von elektrischen Leitungen (140B) mit dem LIG;
Binden der Polymerfolie gegen die Innenstruktur;
Binden einer Kohlenstofffaser-Verbundstruktur (200B) an die Polymerfolie; und
Binden einer Isolierschicht (190B) an die Kohlenstofffaser-Verbundstruktur.

8. Verfahren nach Anspruch 7, wobei:
die Innenstruktur Folgendes ist:
eine Bodenplatte aus Titan oder rostfreiem Stahl; oder
ein Sitz, und vorzugsweise wobei:
die Kohlenstofffaser-Verbundstruktur (200B) aus Folgendem besteht:
einer ersten Kohlenstofffaser-Verbundlage (210B1);
einem Stützkern (220B), der an die erste Kohlenstofffaser-Verbundlage gebunden ist; und
einer zweiten Kohlenstofffaser-Verbundlage (210B2), die an den Stützkern gebunden ist, und
weiter bevorzugt, wobei:
der Stützkern (220B) eine aromatische Polyamidfolie oder eine Aluminiumwabenfolie ist.

9. Verfahren nach Anspruch 7 oder 8, wobei:
Bilden des LIG (120B) nach dem Binden der Polymerfolie (130B) gegen die Innenstruktur durchgeführt wird.

10. Verfahren nach einem der Ansprüche 7-9, wobei:
das LIG (120B) als Maschen- oder Serpentinenmuster gebildet ist.

11. Verfahren nach einem der Ansprüche 7-10, wobei:
die elektrischen Leitungen (140B) über eine Sammelschiene oder eine Leiterbahn (170B) elektrisch mit dem LIG (120B) gekoppelt sind, und vorzugsweise wobei die Sammelschienen oder Leiterbahnen ein ineinandergreifendes Muster bilden.

12. Verfahren nach einem der Ansprüche 7-11, wobei:
die Isolierschicht (190B) Schaumstoff ist; und
die Polymerfolie (130B) Folgendes ist:
eine duroplastische Polymerfolie, die aus Phenolen, Polyimid (PI), gehärtetem Epoxidharz, ungehärtetem Epoxidharz, gehärtetem Cyanatester, ungehärtetem Cyanatester, gehärtetem Polyurethan, ungehärtetem Polyurethan, gehärtetem Silikon, ungehärtetem Silikon oder Polyarylacetylen (PAA) besteht; oder
eine thermoplastische Polymerfolie, die aus einem oder mehreren von Polyimid (PI), Polyetherketonketon (PEKK), Polyaryletherketon (PAEK), Polyester, Polyetheretherketon (PEEK), Polyamid, Polysulfon, Polyetherimid, thermoplastischem Polyurethan (TPU) oder Polyethylennaphthalat (PEN) besteht.

13. Verfahren zum Bereitstellen eines Heizsystems (100C) für eine Komponente eines Flugzeugsystems, Folgendes umfassend:
Bilden von laserinduziertem Graphen (120C), LIG, auf einer Außenhaut der Komponente durch Richten von Laserenergie auf die Haut der Komponente, wobei die Außenhaut aus einem Polymer besteht; und
Koppeln von elektrischen Leitungen (140C) mit dem LIG,
wobei die Komponente ein Ventil, ein Rohr, ein Schlauch oder ein Tank ist.

14. Verfahren nach Anspruch 13, wobei:
das LIG (120C) als Maschenmuster oder Serpentinenmuster gebildet ist, und/oder ferner Folgendes umfassend:
Binden einer Isolierschicht (190C) an die Außenhaut, wobei die Isolierschicht eine oder mehrere von einer Polyimid- oder Silikonisolierung ist, und vorzugsweise ferner Folgendes umfassend:
Bedecken der Isolierschicht (190C) mit einer Stoffbespannung (250) .

15. Verfahren nach Anspruch 13 oder 14, wobei:
die elektrischen Leitungen (140C) über eine Sammelschiene oder Leiterbahn (170C) elektrisch mit dem LIG gekoppelt sind, und vorzugsweise wobei:
die Sammelschienen oder Leiterbahnen ein ineinandergreifendes Muster bilden.

## Revendications

1. Procédé de fourniture d'un système de chauffage (100A) à un revêtement extérieur d'un aéronef, comprenant :
la formation de graphène induit par laser, LIG, (120A) sur une feuille de polymère (130A) en dirigeant l'énergie laser vers la feuille de polymère ;
le couplage de fils électriques (140A) au LIG ; et
le collage de la feuille de polymère contre le revêtement extérieur (110A) ou une couche de protection contre l'érosion fixée au revêtement extérieur de sorte que la feuille de polymère épouse une forme du revêtement extérieur.

2. Procédé selon la revendication 1, comportant :
le couplage des fils électriques (140A) à une source d'alimentation (150A) ; et
l'activation de la source d'alimentation pour un ou plusieurs parmi : le dégivrage du revêtement extérieur (110A) de l'aéronef ; et la prévention de la formation de glace sur le revêtement extérieur de l'aéronef ; et/ou dans lequel :
le revêtement extérieur a la forme d'un profil aérodynamique, et
le revêtement extérieur est formé d'un matériau composite carbone-fibre de verre.

3. Procédé selon la revendication 1 ou 2, comprenant en outre :
le collage d'une couche isolante (190A) à la feuille de polymère (130A).

4. Procédé selon une quelconque revendication précédente, dans lequel :
la feuille de polymère (130A) est thermoformée à la forme du revêtement extérieur (110A) ; et
la formation du LIG (120A) est effectuée après le thermoformage de la feuille de polymère à la forme du revêtement extérieur, et/ou dans lequel :
le LIG est formé sous la forme d'un motif maillé ou d'un motif serpentin.

5. Procédé selon une quelconque revendication précédente, dans lequel :
les fils électriques (140A) sont couplés électriquement au LIG (120A) via une barre omnibus ou une trace (170A) ; et de préférence dans lequel les barres omnibus ou les traces forment un motif interdigité.

6. Procédé selon la revendication 3, dans lequel :
la couche isolante (190A) est un ou plusieurs parmi des isolants en composite de fibre de verre, en polyimide ou en silicone ; et
la feuille de polymère (130A) est :
une feuille de polymère thermodurci qui est formée de composés phénoliques, de polyimide (PI), d'époxy durci, d'époxy non durci, d'ester de cyanate durci, d'ester de cyanate non durci, de polyuréthane durci, de polyuréthane non durci, de silicone durci, de silicone non durci ou de polyarylacétylène (PAA) ; ou
une feuille de polymère thermoplastique formée d'un ou plusieurs parmi le polyimide (PI), la polyéthercétonecétone (PEKK), la polyaryléthercétone (PAEK), le polyester, la polyétheréthercétone (PEEK), le polyamide, la polysulfone, le polyétherimide, le polyuréthane thermoplastique (TPU) ou le poly(naphtalate d'éthylène) (PEN).

7. Procédé de fourniture d'un système de chauffage (100B) à une structure intérieure d'un aéronef, comprenant :
la formation de graphène induit par laser, LIG, (120B) sur une feuille de polymère (130B) en dirigeant l'énergie laser vers la feuille de polymère ;
le couplage de fils électriques (140B) au LIG ;
le collage de la feuille de polymère contre la structure intérieure ;
le collage d'une structure en composite de fibre de carbone (200B) à la feuille de polymère ; et
le collage d'une couche isolante (190B) à la structure en composite de fibre de carbone.

8. Procédé selon la revendication 7, dans lequel :
la structure intérieure est :
un panneau de plancher formé de titane ou d'acier inoxydable ; ou
un siège, et de préférence dans lequel :
la structure en composite de fibre de carbone (200B) est formée de :
une première nappe en composite de fibre de carbone (210B1) ;
un noyau de support (220B) collé à la première nappe en composite de fibre de carbone ; et
une seconde nappe en composite de fibre de carbone (210B2) collée au noyau de support, et
de manière davantage préférée dans lequel :
le noyau de support (220B) est une feuille de polyamide aromatique ou une feuille d'aluminium en nid d'abeille.

9. Procédé selon la revendication 7 ou 8, dans lequel :
la formation du LIG (120B) est effectuée après le collage de la feuille de polymère (130B) contre la structure intérieure.

10. Procédé selon l'une quelconque des revendications 7 à 9, dans lequel :
le LIG (120B) est formé sous la forme d'un motif maillé ou d'un motif serpentin.

11. Procédé selon l'une quelconque des revendications 7 à 10, dans lequel :
les fils électriques (140B) sont couplés électriquement au LIG (120B) via une barre omnibus ou une trace (170B), et de préférence dans lequel les barres omnibus ou les traces forment un motif interdigité.

12. Procédé selon l'une quelconque des revendications 7 à 11, dans lequel :
la couche isolante (190B) est en mousse ; et
la feuille de polymère (130B) est :
une feuille de polymère thermodurci qui est formée de composés phénoliques, de polyimide (PI), d'époxy durci, d'époxy non durci, d'ester de cyanate durci, d'ester de cyanate non durci, de polyuréthane durci, de polyuréthane non durci, de silicone durci, de silicone non durci ou de polyarylacétylène (PAA) ; ou
une feuille de polymère thermoplastique formée d'un ou plusieurs parmi le polyimide (PI), la polyéthercétonecétone (PEKK), la polyaryléthercétone (PAEK), le polyester, la polyétheréthercétone (PEEK), le polyamide, la polysulfone, le polyétherimide, le polyuréthane thermoplastique (TPU) ou le poly(naphtalate d'éthylène) (PEN).

13. Procédé de fourniture d'un système de chauffage (100C) à un composant d'un système d'aéronef, comprenant :
la formation de graphène induit par laser, LIG, (120C) sur un revêtement extérieur du composant en dirigeant l'énergie laser vers le revêtement du composant, le revêtement extérieur étant formé d'un polymère ; et
le couplage de fils électriques (140C) au LIG,
dans lequel le composant est une soupape, un tube, un tuyau ou un réservoir.

14. Procédé selon la revendication 13, dans lequel :
le LIG (120C) est formé sous la forme d'un motif maillé ou d'un motif serpentin, et/ou comprenant en outre :
le collage d'une couche isolante (190C) au revêtement extérieur, dans lequel la couche isolante est un ou plusieurs parmi un isolant en polyimide ou en silicone, et comprenant de préférence en outre :
le recouvrement de la couche isolante (190C) d'une garniture en tissu (250).

15. Procédé selon la revendication 13 ou 14, dans lequel :
les fils électriques (140C) sont couplés électriquement au LIG via une barre omnibus ou une trace (170C), et de préférence dans lequel :
les barres omnibus ou les traces forment un motif interdigité.
